# EUROPEAN PATENT APPLICATION

(11) **EP 4 451 011 A1**
(43) Date of publication of application: **23.10.2024**
(21) Application number: 23386029.5
(22) Date of filing: 20.04.2023
(51) Int. Cl.: G01S 13/90, G08B 17/00

(54) **WILDFIRE MONITORING METHODS AND SYSTEM**

(71) Applicant: Iceye Oy, 02150 Espoo (FI)
(72) Inventor: JOHNSY, Angel, 02150 Espoo (FI); KOURKOULI, Penelope, 02150 Espoo (FI); LAM, Duhane, 02150 Espoo (FI); WOLLERSHEIM, Michael, 02150 Espoo (FI)
(74) Representative: Dentons UK and Middle East LLP

(57) **Abstract**

A method for monitoring wildfire progression is provided, comprising the steps: identifying an area (200) on the surface of Earth where a wildfire has started; instructing to acquire a first interferometric Synthetic Aperture Radar 'SAR' image pair of the area over a first observation period, wherein the wildfire remains active during the first observation period; receiving the first interferometric SAR image pair and creating an initial coherence map (600) based on the difference in phase of the first interferometric SAR image pair; determining, based on the initial coherence map (600), one or more areas of low coherence (601) indicative of a transition from a forested into a burnt area; instructing to acquire a second interferometric SAR image pair of the area over a second observation period, wherein the second observation period is subsequent the first observation period; receiving the second interferometric SAR image pair and creating a subsequent coherence map (610, 620, 630) based on the difference in phase of the second interferometric SAR image pair; and monitoring a change of the one or more areas of low coherence (601) based on the subsequent coherence map (610, 620, 630) indicative of a progression of the wildfire. Further, a ground station system for monitoring wildfire progression is provided.

## Description

### Field of the Invention

The present application relates to environmental change monitoring. In particular, the present application relates to wildfire progression monitoring using Synthetic Aperture Radar (SAR).

### Background to the Invention

In recent years, there has been a significant increase in wildfires due to climate change. It has been shown that changes in climate create warmer, drier conditions, leading to longer and more active fire seasons. Wildfires have an increasing impact on human settlements, infrastructure, buildings and the environment. Wildfires are dynamic fast-changing events that have the potential for loss of live and serious damage to natural and man-made structures. Mitigating and monitoring wildfires is a crucial task that involves strategic planning and detailed monitoring of the fire activity.

In particular, tracking the spread of a wildfire once it has started is critical for directing resources for fighting the fire, directing evacuations where necessary, and minimizing loss of life and damage to forests, fields, and man-made structures. However, wildfires often start in remote areas, can spread quickly and in unpredictable ways, and can be very difficult to monitor. Surveillance from the ground is often impossible because of access, is dangerous, and does not provide the overall picture of the fire. Smoke and weather can also restrict visibility around a fire significantly, making accurate aerial surveillance difficult. Remote sensing techniques, for example using optical satellites from space, also have the disadvantage of not being able to penetrate the clouds and the smoke to get an accurate picture of the development of the fire.

Synthetic Aperture Radar (SAR) techniques have been applied to environmental change monitoring, such as land subsistence and deforestation, due to their capability to penetrate clouds and smoke and to image day and night, which can be an advantage over optical monitoring techniques. Some limited studies have been carried out using SAR for determining the extent of an area that has been burnt by fire, usually only after the event has happened and the fire is no longer burning. However, these techniques typically require comparison with recent imagery taken of the area prior to the fire, which is unlikely to be available given the widespread areas where wildfires are likely to occur. Traditional SAR techniques and the typically large time intervals between subsequent images do not have the ability to aid emergency responders with immediate planning and actions to be taken in the event of a fast-moving and dynamic wildfire event.

The inventors have devised the claimed invention in light of the above considerations.

The embodiments described below are not limited to implementations which solve any or all of the disadvantages of the known approaches described above.

### Summary of Invention

This Summary is provided to introduce a selection of concepts in a simplified form that are further described below in the Detailed Description. This Summary is not intended to identify key features or essential features of the claimed subject matter; variants and alternative features which facilitate the working of the invention and/or serve to achieve a substantially similar technical effect should be considered as falling into the scope of the invention.

In a general sense, the present invention uses coherence maps to identify a progression of a wildfire. A wildfire is an uncontrolled fire that burns in wildland vegetation. Wildfires can burn in forests, grasslands, savannas, and other ecosystems. They can also spread into farmland and urban areas. The invention is based on the finding that a drop or loss of coherence that is visible in a coherence map obtained within a time interval within which the wildfire remains active can be interpreted as a transition from an unburnt area into a burnt area, for example from a forested area into a burnt area in the case of a forest fire. This provides an effective tool for monitoring progression of wildfires, as a change of the loss of coherence in a subsequent coherence map can be interpreted as progression of the wildfire. The invention is defined as set out in the appended set of claims.

In a first aspect, there is provided a method for monitoring wildfire progression. The method comprises the steps: identifying an area on the surface of Earth where a wildfire has started; instructing to acquire a first interferometric Synthetic Aperture Radar (SAR) image pair of the area over a first observation period, wherein the wildfire remains active during the first observation period; receiving the first interferometric SAR image pair and creating an initial coherence map based on the difference in phase of the first interferometric SAR image pair; determining, based on the initial coherence map, one or more areas of low coherence indicative of a transition from a forested into a burnt area; instructing to acquire a second interferometric SAR image pair of the area over a second observation period, wherein the second observation period is subsequent the first observation period; receiving the second interferometric SAR image pair and creating a subsequent coherence map based on the difference in phase of the second interferometric SAR image pair and creating a subsequent coherence map based on the difference in phase of the second interferometric SAR image pair; and monitoring a change of the one or more areas of low coherence based on the subsequent coherence map indicative of a progression of the wildfire.

In some embodiments, the change of the one or more areas of low coherence includes one or more of: a difference in size, a difference in position, a difference in shape, a difference of coherence, a direction and/or rate of change of coherence.

In some embodiments, the area of low coherence has a coherence value less than a threshold value, optionally wherein the threshold value is 0.3, more optionally wherein the threshold value is 0.2.

In some embodiments, the threshold value is selected based on an angle in which the SAR images of the first interferometric SAR image pair are acquired and/or based on the first observation period of the first interferometric SAR image pair.

In some embodiments, the first observation period and/or the second observation period are within a time interval of 72 hours, optionally 48 hours, more optionally 24 hours.

In some embodiments, the second interferometric pair is acquired during a time in which the wildfire remains active.

In some embodiments, the first and second interferometric pairs are obtained by one or more satellites operating in the X-Band range.

In some embodiments, the first interferometric pair and the second interferometric pair are obtained from different satellites; or wherein the first interferometric pair and/or the second interferometric pair are formed based on two SAR images taken from different satellites.

In some embodiments, the first interferometric pair and the second interferometric pair are obtained from different imaging geometries.

In some embodiments, determining one or more areas of low coherence comprises determining a perimeter around the one or more areas of low coherence.

In some embodiments, the method further comprises: determining, based on the subsequent coherence map, one or more subsequent areas of low coherence indicative of a transition from a forested into a burnt area.

In some embodiments, the method further comprises: determining, based on the subsequent coherence map, a time interval in which the one or more areas of low coherence return to average coherence and/or high coherence.

In some embodiments, the one or more areas of low coherence and/or the one or more subsequent areas of low coherence are highlighted to provide a visual representation of the progression of the fire and/or to identify hot spots, optionally using false colour.

In some embodiments, the coherence of forested areas is increased by a phase filter that reduces a phase resolution, optionally to between 9 m and 60 m, more optionally to between 25 m and 50 m, and even more optionally to between 30 m and 45 m.

In some embodiments, the method further comprises: creating a time-lapse video comprising the initial coherence map and the subsequent coherence map and optionally one or more additional coherence maps created based on the difference in phase of one or more additional interferometric SAR image pairs acquired over subsequent observation periods.

In a second aspect, there is provided a ground station system for monitoring wildfire progression. The ground station system comprises a computing system configured to perform the method according to the first aspect.

The features and embodiments discussed above may be combined as appropriate, as would be apparent to a person skilled in the art, and may be combined with any of the aspects of the invention except where it is expressly provided that such a combination is not possible or the person skilled in the art would understand that such a combination is self-evidently not possible.

### Brief Description of the Drawings

Embodiments of the present invention are described below, by way of example, with reference to the following drawings.
**Figure** 1 shows a method for monitoring progression of a wildfire;
**Figure** 2 is a perspective view of a satellite travelling in orbit around Earth;
**Figure** 3 shows an example of a coherence map based on an interferometric SAR image pair acquired over an observation period including an area of low coherence (a) without and (b) with a perimeter around the areas of low coherence;
**Figure 4** shows an optical image (a) and a coherence map (b) over an observation period between 26 and 28 August 2022 of an area where a wildfire was identified;
**Figure 5** shows an optical image (a) and a coherence map (b) of the same area as Figure 4 including a plurality of fire perimeters;
**Figure 6** shows an evaluation of the area of low coherence of Figure 4 obtained according to the method for monitoring wildfire progression;
**Figure 7** shows a sequence (a)-(d) of four coherence maps obtained over different observation periods for monitoring fire progression;
**Figure 8** shows a sequence (a)-(d) of the same four coherence maps as Figure 7 obtained over different observation periods for monitoring fire progression, using false colour to highlight the actively burning areas;
**Figure 9** shows images (a)-(c) of the same three coherence maps with no phase filtering and with phase filtering; and
**Figures 10 to 13** illustrate different scenarios for imaging sequences that can be used to instruct the acquisition of the first and second interferometric image pairs.

### Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The present disclosure provides a method for monitoring wildfire progression. To this end, a radar technique called Interferometric synthetic aperture radar (InSAR) may be implemented, wherein the phase information in two or more SAR images can be used to detect changes. Typically, this is used for applications such as generating maps of surface deformation, using differences in the phase of the waves returning to a satellite or an aircraft. To this end, the phase portion of the radar signal may be used to monitor during-fire and post-fire vegetation changes, such as a transition from a forested into a burnt area, by using interferometric coherence images.

For a better understanding, some terms are defined first.

A SAR system, for example from an Earth-orbiting satellite, may transmit and receive electromagnetic waves. The emitted radar wave is propagated through the atmosphere until it contacts the Earth's surface, wherein part of the emitted wave is scattered and/or reflected back to and recorded by a SAR sensor. The SAR signal contains information on the intensity and phase of the reflected (or backscattered) signal, and the length of time it takes for the signal transfer to the surface of the Earth and back provides location information. The phase of an outgoing wave is known and can be compared to the phase of the return signal. For example, the phase of the return wave depends on the distance to the target. This is observable as a phase difference or phase shift in the returning wave. An extra fraction of a wavelength is of particular interest and can be used to measure changes on the ground to great accuracy. For example, surface deformation (due to subsidence, volcanic activity, or otherwise) in the order of mm's can be measured, despite the overall resolution of the SAR image being on the order of 1 m, for example.

In practice, the phase of the return signal is affected by several factors, which together can make the absolute phase return in any SAR data collection essentially arbitrary, with no correlation from pixel to pixel. To get useful results, it may be necessary that some of the effects are isolated or removed. Interferometry uses two images of the same area, for example, taken from a same position, and finds the difference in phase between them, producing an image referred to as a coherence map or interferogram.

An interferometric Synthetic Aperture Radar (SAR) image pair (or an interferometric pair of SAR images) is formed from two SAR images acquired at different times. A time interval between the acquisition of the two SAR images is referred to as an observation period. Accordingly, each interferometric image pair is acquired over an observation period.

A second observation period subsequent a first observation period is a time interval that extends at least partly after the point in time where the first observation period ends. Accordingly, the time interval of the second observation period extends at least partly or fully after the time interval of the first observation period. The second observation period can have a longer, shorter or same length as the first observation period. The first and second observation periods can be overlapping time intervals or time intervals that do not overlap, wherein a positive overlap represents actual overlap, while zero or negative value means that the time intervals do not overlap at all. A negative value further means that there is a gap in time between the end of the first observation period and the start of the second observation period. The first and second observation periods can have the same starting point. The end point of the second observation period is at a point in time subsequent the end point of the first observation period.

A coherence map is created based on the two SAR images of an interferometric pair. A coherence map may also be referred to as an interferogram. Coherence maps can be created for all possible interferometric pairs. It is a common practice during InSAR processing to create a coherence map that measures the degree of correlation between the two SAR images acquired at different times. Coherence is typically used to detect very small mm changes that happen over a long period of time, for example to show ground-surface displacement between the two time periods in which the SAR images of the interferometric SAR image pair are acquired, which could be months apart. According to the current disclosure, coherence maps can be also used to monitor changes in dynamic and fast-moving events such as wildfires.

In a general sense, higher coherence values indicate that the backscattering elements remain relatively unchanged or undistributed at the scale of the SAR wavelength over the observation period. For example, high coherence values can be expected for burnt areas. Lower coherence values (or a loss of coherence) are typically indicative of a decorrelation, which may be caused by environmental changes. For example, forested areas typically have lower coherence (due to growth, movement of the vegetation, wind, etc.) depending on the length of the observation period.

A forested area is an unburnt area that is covered with a forest and/or other vegetation. In one example, the forested area may be filled with trees. Alternatively and/or additionally, the forested area may be covered with other vegetation, such as grasslands, savannas, and/or farmland. Depending on the type of vegetation present, a wildfire may be more specifically identified as a bushfire, desert fire, grass fire and so on.

The present invention is based on the finding that coherence data can be used to monitor temporal trends during-fire and post-fire effects. A loss of coherence may be caused by a wildfire, wherein the coherence values may provide an indication how the surface changed with respect to the vegetation structure between the two SAR image acquisitions, wherein the wildfire remains active during the observation period. Accordingly, the loss of coherence may be indicative of a transition from a forested into a burnt area. The loss of coherence may also only be temporary. Once the area has been burnt it will stop changing and can come back into coherence, indicating that the area is no longer actively burning. As such, a progression of the wildfire can also be monitored by evaluating a subsequent change of the loss of coherence.

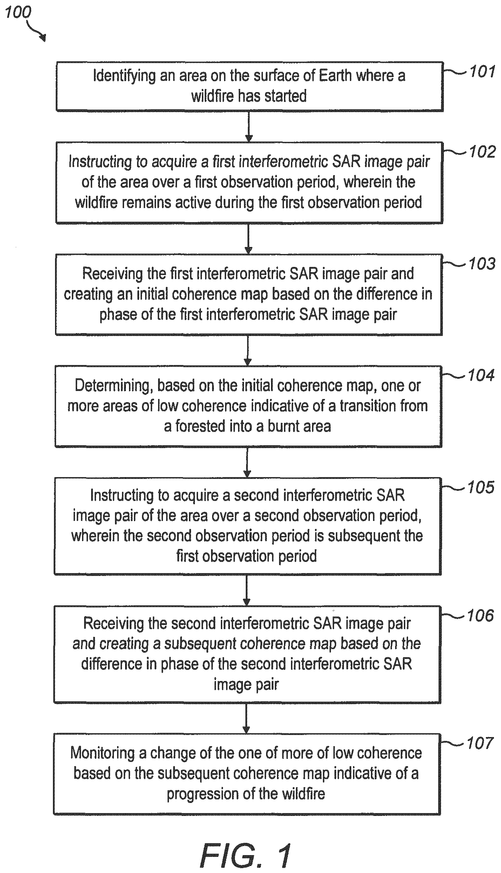

Figure 1 illustrates a method 100 for monitoring wildfire progression. The method 100 may be performed by a computing system of a ground station system. The computing system may comprise one or more processors and memory, wherein the one or more processors are configured to implement the method 100.

First, at operation 101, an area on the surface of Earth is identified where a wildfire has started. For example, wildfires can be detected and reported by forest and park ranges. Many wildfires are also detected and reported by the public. This may include from social media data, and also from dedicated phone numbers for reporting forest fires. During periods of high fire danger, e.g., following lightning activity, wildfires may be identified by air patrols or satellites. Another way to detect a fire is by lookout stations. These are situated at a location with extensive visibility and have associated structures manned by a lookout observer whose prime purpose is to locate and report wildfires. Another way to detect wildfires is by thermal imaging technology.

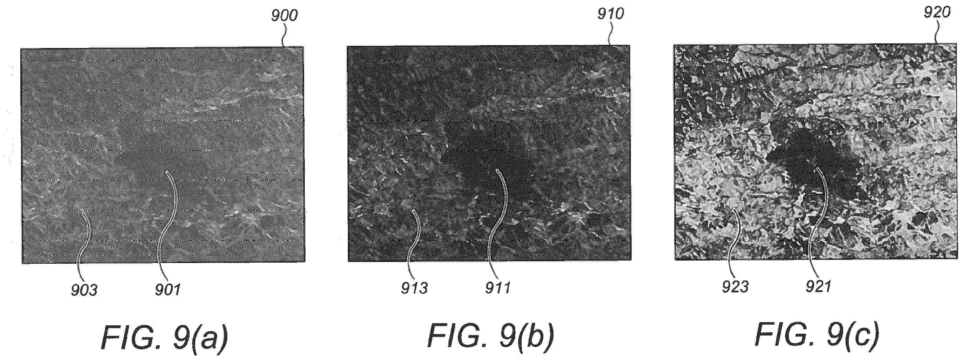

At operation 102, acquisition of a first interferometric SAR image pair of the area over a first observation period is instructed, wherein the wildfire remains active during the first observation period. Acquiring an interferometric SAR image pair may include acquiring one or two SAR images of the area during a time interval in which the wildfire remains active. For example, if a first SAR image of the wildfire has happened to be captured of the area of the fire, it may be sufficient to acquire a second SAR image that forms an interferometric pair with the first SAR image. Examples of different scenarios for imaging sequences that can be used to instruct the acquisition of the first interferometric image pair are described further with reference to Figures 9-12.

At operation 103, the first interferometric SAR image pair is received, and an initial coherence map based on the difference in phase of the first interferometric SAR image pair is created. Coherence maps are usually calculated using only the phase portion of the radar signal. In the (initial) coherence map, the phase in the areas that have not changed will generally still be same between the first and second interferometric images, which is known as being in coherence. Areas that have changed may no longer be in coherence. Because the images of the first interferometric SAR pair are taken during the wildfire, the initial coherence map at operation 103 shows changes during a time interval in which the wildfire remains active.

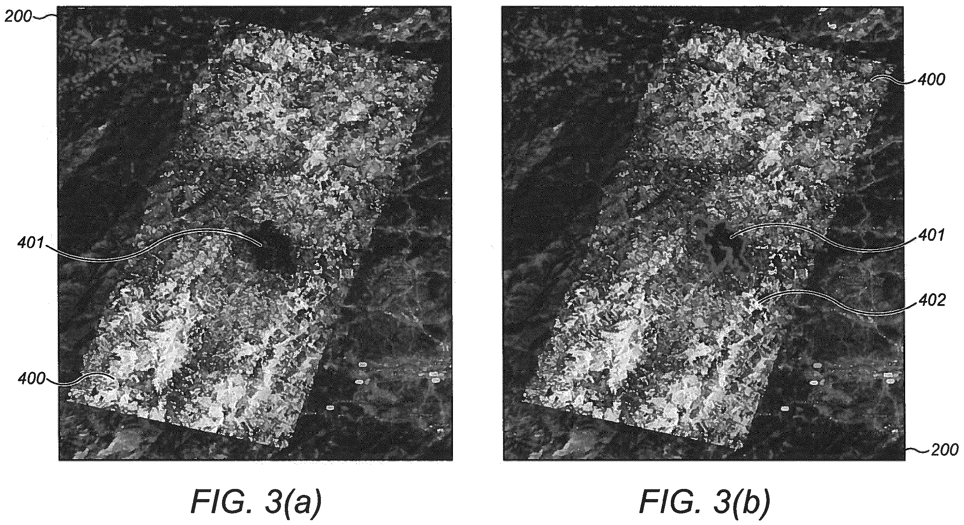

At operation 104, one or more areas of low coherence are determined based on the initial coherence map. The one or more areas of low coherence, or in other words the loss or drop of coherence in a specific area, is indicative of a transition from a forested into a burnt area. Accordingly, by determining the one or more areas of low coherence, the position of the wildfire can be accurately identified. A coherence map including an area of low coherence is described in further detail with reference to Figure 3. It has been found that in connection with an active wildfire, the loss or drop of coherence in the area can be distinguished from both forested and previously burnt areas around it.

At operation 105, acquisition of a second interferometric SAR image pair of the area over a second observation period is instructed, wherein the second observation period is subsequent the first observation period. Acquiring an interferometric SAR image pair may include acquiring one or two SAR images of the area during a time interval in which the wildfire remains active. For example, if a first SAR image of the wildfire has happened to be captured of the area of the fire, for example, in connection with the first interferometric image pair, it may be sufficient to acquire a second SAR image that forms an interferometric pair with the first SAR image, i.e., the second interferometric SAR image pair. Different scenarios for imaging sequences that can be used to instruct the acquisition of the second interferometric image pair are described further with reference to Figures 9-12.

At operation 106, the second interferometric SAR image pair is received, and a subsequent coherence map based on the difference in phase of the second interferometric SAR image pair is created.

At operation 107, a change of the one or more areas of low coherence based on the subsequent coherence map is monitored. The change of the one or more areas of low coherence is indicative of a progression of the wildfire. The change may be used to predict how the wildfire may spread and at what rate. A change may also be used to predict how and when the wildfire may stop and/or if response actions against a wildfire are effective. Accurate predictions of wildfires may help to allocate resources more efficiently and quickly. Accurate predictions of wildfires may help to determine an appropriate and timely response to wildfire activity that can prevent damage and/or loss of life.

The ground station system for monitoring wildfire progression may include components distributed over multiple locations, optionally different terrestrial locations. For example, the ground station system may comprise one or more ground stations and a ground automation at a different terrestrial location than the ground station(s). The ground station and the ground automation may comprise a computing system configured to implement some or all operations of the method 100. For example, once a wildfire has been identified at operation 101, the ground automation may be configured to instruct the acquisition of image data at operation 102 and operation 105 via the ground station. In one example, the ground station is configured to receive image data from one or more satellites at operation 103 and/or operation 106. From the ground station, the image data may be routed to the ground automation for processing. The ground automation may be configured to create a coherence map and determine one or more areas of low coherence at operations 103, 104 and 106. The ground automation may also be configured to monitor a change of the area of low coherence indicative of a progression of the wildfire at operation 107.

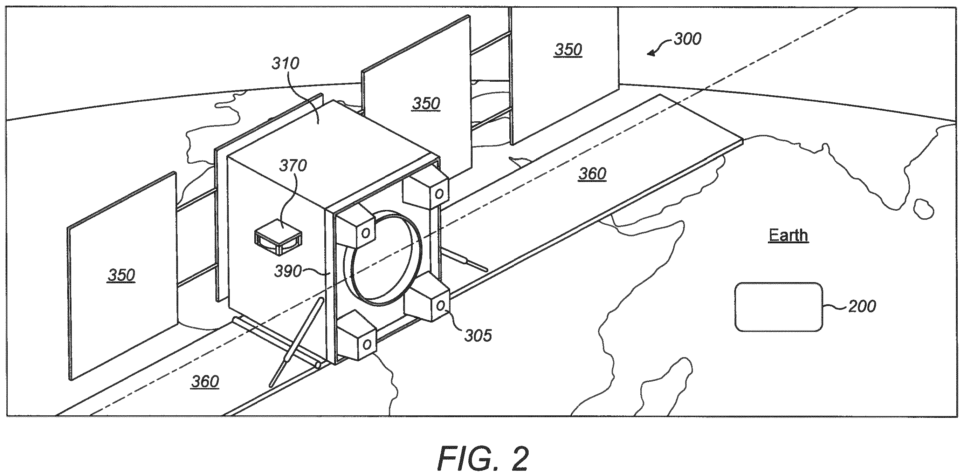

Figure 2 is a perspective view of a satellite 300 in orbit over Earth as an example of a platform that may be used to acquire SAR image data. The satellite 300 may be instructed to acquire SAR image data of an area 200 where a wildfire has been identified. The satellite 300 comprises a body 310, solar panels 350 and "wings" 360. The satellite 300 further comprises an attitude determination and control system "ADCS" unit, which may be provided with one or more reaction wheels, one of which is indicated at 370. The reaction wheel 370 may exert force of torque on the satellite body 310. The ADCS unit is used to control the satellite's attitude and orientation while travelling in orbit, for example to bring and/or maintain the satellite 300 in a desired orientation for imaging, such as Synthetic Aperture Radar (SAR) imaging.

A satellite, for example satellite 300 of Figure 2, is generally provided with a propulsion system 390 for manoeuvring the satellite with generated thrust. The propulsion system 390 is mounted on the body 310 on the surface opposite the solar panels 350. The propulsion system 390 comprises a plurality of thrusters 305. The four thrusters depicted in Figure 2 are configured to produce thrust for manoeuvring the satellite when required. The thrusters 305 are generally operated to maintain the satellite 300 in a particular orbit, or to adjust the orbit. For example, the thrusters 305 may be used to propel the satellite 300 in a particular direction with respect to the surface of the Earth.

The satellite 300 shown in Figure 2 may have a SAR sensor operating in the X-band range. The X-band range has a frequency range of 8-12 GHz and a wavelength of around 3.8 - 2.4 cm. In another example, C-Band SAR operating at 4-8 GHz (wavelength 3.8 - 7.5 cm) has been the "workhorse" of SAR, used for global mapping; change detection, monitoring of areas with low to moderate penetration, and higher coherence. It has been found that X-band SAR provides for higher resolution monitoring of wildfires, although it is known to have little penetration into vegetation cover and fast coherence decay in vegetated areas. This means that with X-band forested areas may show low coherence, thereby making it difficult to distinguish between forested areas and areas that have recently been burnt. However, the fast coherence decay in vegetated areas can be mitigated through lower revisit times, and hence shorter observation periods between the two SAR images that form an inSAR pair. For example, a constellation of satellites operating at X-band may provide SAR data with lower revisit times, thus providing high resolution while at the same time mitigating the loss of coherence in vegetated areas. This works well for wildfire monitoring because shorter observation periods are also desirable due to the dynamic nature of wildfires, and shorter observation periods can provide higher temporal resolution for showing the progression of the wildfire. Other techniques can also be employed to mitigate the fast coherence decay in vegetated areas, which will be discussed further below.

The satellite 300 shown in Figure 2 may be a micro satellite or a small satellite, whose smaller size and greater agility may allow it to be manoeuvred in its entirety to change its attitude. This kind of manoeuvre may be performed using the ADCS unit. In an example, the satellite 300 is a micro satellite with a mass of 100 kg to 500 kg. The satellite 300 may be one of a plurality of satellites in a constellation otherwise known as a fleet.

In Figures 3 to 7, an example of wildfire monitoring according to the current disclosure is described. The wildfire ("Rum Creek Fire") started due to a lightning strike on 17 August 2022 in Galice, in southern Oregon, United States. By 30 August 2022, this dangerous wildfire had grown to nearly 14,000 acres and had already destroyed one home and two structures. An additional 5,035 homes and 2,600 other structures were threatened, numerous areas were evacuated, and a firefighter was killed while fighting the fire. A state of emergency was declared in Oregon and smoke from the Rum Creek Fire caused significant deterioration in air quality and obscured visibility all over southern Oregon.

Figure 3(a) shows an example of a coherence map 400, shown in orthographic format, of an area where the Rum Creek Fire wildfire occurred. The coherence map 400 is shown superimposed to an optical image 200 of the same area. The coherence map 400 was generated based on an interferometric SAR image pair, for example, acquired by satellite 300 of Figure 2. After the fire was reported, the SAR satellite constellation of ICEYE Oy of Finland was tasked to take images of the wildfire area. Subsequently, a first SAR image was taken on 26 August 2022 and a second SAR image was taken on 28 August 2022. As such, the interferometric pair was acquired over an observation period during which the wildfire remained active. The observation period may be within a time interval of 72 hours, optionally 48 hours, more optionally 24 hours. In this example, the observation period is approximately 48 hours.

The two SAR images of the interferometric pair have been formed from images acquired in "stripmap" mode, which is a well-known SAR acquisition mode. In an example, the nominal width of the strip is approximately 30 km, with a nominal length of 50 km, which is approximately the dimensions of the outer shape of the coherence map 400. Resolution on the ground in stripmap mode is nominally 3m × 3m. The conventional SAR strip mapping mode assumes a fixed pointing direction of the radar antenna broadside to the satellite track. The stripmap image is formed in width by the swath of the SAR and follows the direction of the flight line of the satellite 300 itself. SAR images can also be obtained in other modes such as spotlight mode, which can for example provide highly detailed images of a nominally 5 km × 5 km area with a resolution of 1m × 1m on the ground, and scan mode, which can for example provide an overview of a larger nominally 100 km × 100 km area at a resolution of 15m × 15m on the ground. Images obtained using other SAR modes can also be used.

As shown in Figure 3(a) the coherence map 400 includes a darker area indicating an area of low coherence 401. The low coherence or loss/drop of coherence in this area represents a transition from a forested into a burnt area during the observation period. For example, the burning of trees or other vegetation causes significant changes in the area and in the backscattered phase of the SAR signal. This can be particularly highlighted by X-band radar because X-band radar typically does not penetrate vegetation, and burning of the vegetation can cause the SAR signal to scatter back from a much lower point (for example a point on the ground) compared to a point at the top of a tree. In some embodiments, the area of low coherence has a coherence value less than a threshold value. The threshold value may be selected based on an angle in which the first and second SAR images of the first coherence pair are acquired. Additionally or alternatively, the threshold value may be selected based on the first observation period between the first and second SAR images. In an example, threshold values of between 0.25 and 0.30 were determined to be in a good range based on calibration with a known fire perimeter.

In order to help differentiate between the unburnt and burnt areas, the coherence of a forested (unburnt) area may be increased by a phase filter that reduces resolution, reduces noise, and/or increases contrast. Phase filtering may play an important role in InSAR applications, as it can be used to reduce the resolution of and/or filter out the noise and improve contrast in the phase values of the image. This can help make low coherent areas, such as the area of low coherence 401 in Figure 3(a) more visible and more easily discernible in the coherence map. For example, the coherence of the forested (unburnt) area 400 can be increased by implementing a phase filter that effectively reduces the phase resolution to between 9 m and 60 m, 25 m and 50 m, or between 30 m and 45 m. This can help to increase the contrast between the low-coherence recently burnt area 401, and the unburnt forested area 400. Phase filtering can also help to mitigate and reduce any coherence decay in the forested (unburnt) areas that could occur over time, particularly for X-band radar, and especially for longer observation periods. The coherence decay would cause the forested areas to also exhibit low coherence, and would make separating the burnt areas from the unburnt areas more difficult. More details regarding phase filtering are provided below with reference to Figures 9(a)-(c).

Figure 3(b) shows the same coherence map 400 as Figure 3(a), also in orthographic format, wherein a perimeter 402 around the area of low coherence 401 has been determined. As can be seen, the perimeter is quite irregular and detailed. Without this technique, the extent of a fire may be difficult to determine because fires often burn in unusual shapes, and may include hotspots and other features such as fingers (either burnt or unburnt). Further, known techniques for determining a fire perimeter, especially in near real time, are expensive and normally require input from multiple data sources. The perimeter is the distance around the fire, for example, the entire outside edge of boundary of a fire (or burnt area).

The perimeter 402 may be determined by applying the threshold approach to the coherence map and encircling each the determined area(s) of low coherence. For example, the area of low coherence 401 is determined to have a coherence value less than a threshold value of 0.3. Accordingly, this technique allows to provide an accurate fire perimeter resulting from a single data source. The area of the fire may be determined in the same way.

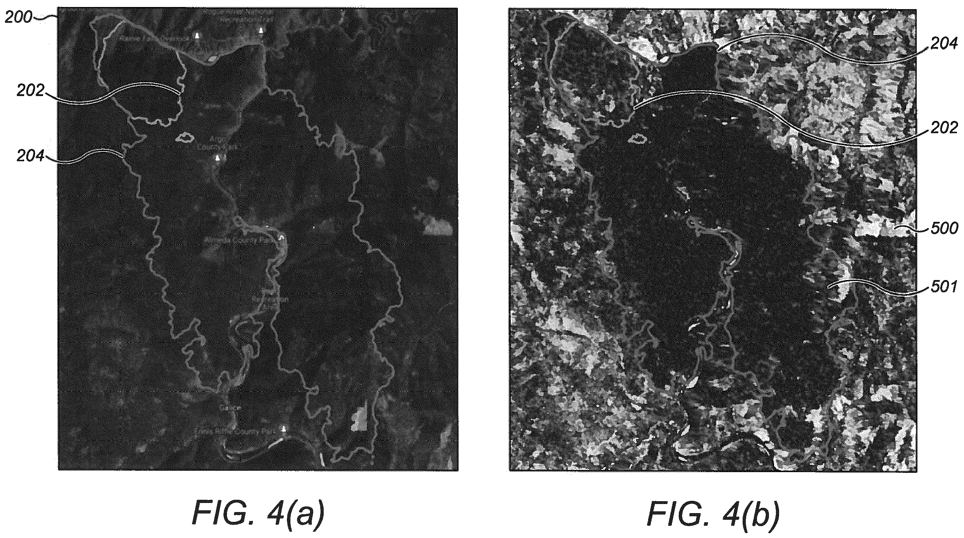

Figure 4(a) shows a detailed optical image 200 of the Rum Creek Fire area. Recall that the fire started on 17 August 2022. A first perimeter 202 is the fire perimeter as of 26 August 2022, and a second perimeter 204 is the fire perimeter as of 29 August 2022 as estimated by Wildland Fire Interagency Geospatial Services (WFIGS) Group. As can be seen, the fire expanded quite rapidly and even spread across the Rogue River, which is shown cutting through the middle of Figure 4(a).

Figure 4(b) shows a corresponding coherence map 500 of the area during a time interval in which the Rum Creek Fire has remained active. After the wildfire started on 17 August satellites were tasked to image the area based on the reports of a fire. A first interferometric pair was taken with SAR images on 26 August 2022 and on 28 August 2022. No prior SAR images that could be used to form an interferometric SAR image pair were available for this area. In this example, the progression is monitored over an observation period as the wildfire spreads between 26 August 2022 and 28 August 2022. Accordingly, coherence map 500 is created based on an interferometric SAR image pair over an observation period of approximately 48 hours (2 days). The two X-band SAR images forming the interferometric pair were acquired during descending passes with an incidence angle of about 38° and a wavelength of 0.031 m. The first and second perimeters 202, 204 as estimated by WFIGS group are included in the coherence map 500 for the sake of comparison.

As can be seen in the coherence map 500 of Figure 4(b), the coherence map 500 includes an area of low coherence 501 indicating a transition from a forested area into a burnt area between 26 August 2022 and 28 August 2022, i.e., over an observation period of approximately 48 hours. The coherence on the non-burnt area outside the second fire perimeter 204 is high and can be readily distinguished from the burnt area 501. For a forested area, this is helped by the relatively short observation period of only approximately 48 hours of the interferometric SAR image pair used to create the coherence map 500.

Importantly, the coherence values of the area that was already burnt on 26 August 2022, (i.e., prior to the first image being taken and which is indicated for comparison by the first fire perimeter 202, is also high, despite already having been burnt. This is because, by 26 August 2022, the area marked by perimeter 202 had substantially finished burning, and as such did not change much further between 26 August and 28 August. In other words, the coherence values start to come back into coherence in a coherence map that is based on an interferometric pair acquired when the area has already finished burning. Being able to identify areas as they are being burnt as well as areas that have finished burning is quite enabling for wildfire monitoring and provides information that would otherwise have been particularly difficult to obtain.

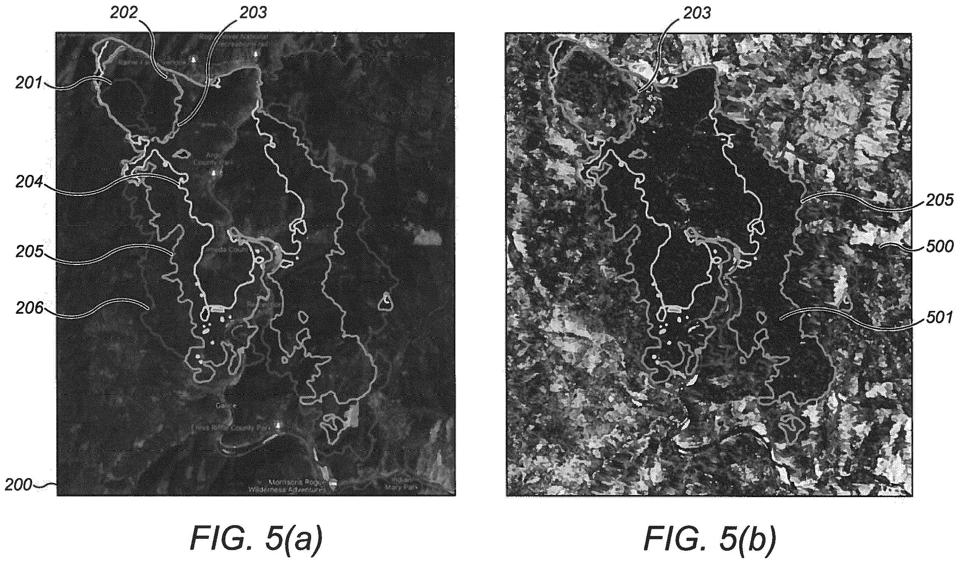

Figure 5(a) shows the optical image 200 of Figure 4(a) with a plurality of fire perimeters 201-206 as estimated and released by WFIGS Group. Figure 5(b) shows the corresponding coherence map 500 of Figure 5b. The plurality of fire perimeters 201-206 as released by WFIGS group are included in the coherence map 500 for comparison.

With regard to Figure 5(a) and (b), a first perimeter 201 is the estimated fire perimeter as of 23 August 2022 (shortly after the fire started on 17 August 2022 ), a second perimeter 202 is the fire perimeter as of 25 August 2022, a third perimeter 203 is the fire perimeter as of 26 August 2022, a fourth perimeter 204 is the fire perimeter as of 27 August 2022, a fifth perimeter 205 is the fire perimeter as of 29 August 2022 and a sixth perimeter 206 is the fire perimeter as of 30 August 2022 as estimated and released by Wildland Fire Interagency Geospatial Services (WFIGS) Group.

For comparison, the coherence map 500 has been created based on an interferometric SAR image pair of the area over an observation period between 26 August 2022 and 28 August 2022. It can be seen in Figure 5(b), that the area of low coherence 501 indicative of a transition from a forested into a burnt area over the observation period between 26 August and 28 August 2022 aligns quite well with the area of the fifth perimeter 205, which indicates the total area burnt up to 29 August, minus the area of the third perimeter 203, which indicates the total area burnt up to 26 August 2022.

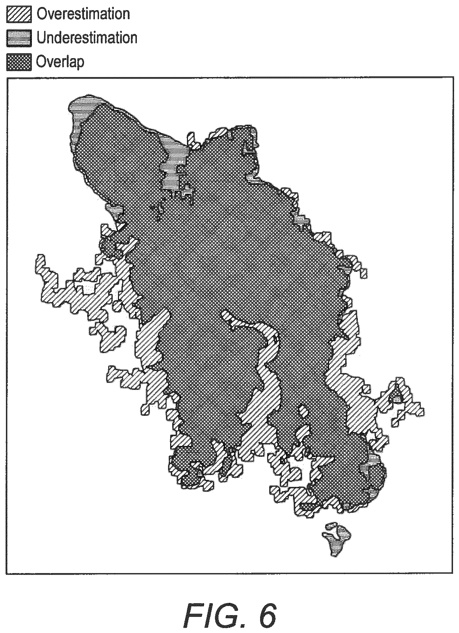

Figure 6 shows an evaluation of the area of low coherence 501 of Figures 4 and 5. The area of low coherence 501 over an observation period between 26 August 2022 and 28 August 2022 has been determined using a classic threshold method. The results have been compared to the most relevant fire perimeters as estimated and released by WFIGS group. As can be seen in Figure 6, the overlap between the area of low coherence 501 determined based on the coherence map 500 shows on overlap of 73.0% with the area as defined by fire perimeters. In other words, the actual area of the area burnt between 26 August and 29 August based on the perimeters as released by WFIGS Group is approximately 34 km² (8404 acres) and the estimated burnt area based on the area of low coherence is approximately 38 km² (9431 acres).

Further, as can be seen in Figure 6, the overestimation of the area of low coherence 501 is 22.6% and the underestimation of the area of low coherence 501 is 4.4%. One possible explanation for the overestimation and underestimation is that the perimeters released by WFIGS Group only provide an accuracy of 1 day, wherein the observation period can be more precisely determined based on the time stamp of the SAR images of the interferometric pair. Furthermore, the information gleaned from the WFIGS perimeters show the fire progression between 26 August and 29 August, whereas the area of low coherence is estimated for between 26 August and 28 August. It may in fact be that the WFIGS perimeters include inaccuracies themselves. Regardless, the relatively high degree of correspondence between the two methods provides confidence of the accuracy of the method according to the current disclosure.

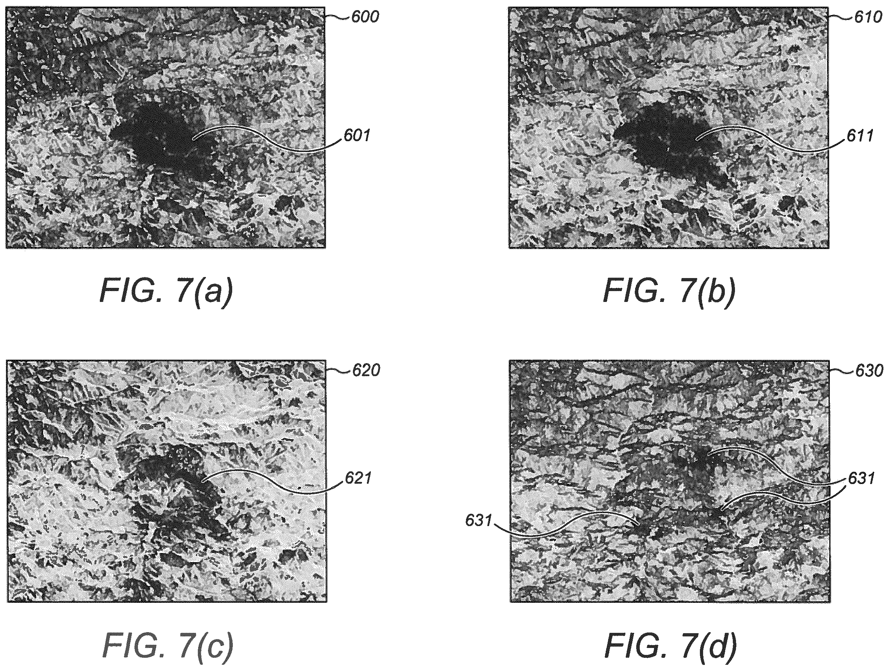

Figure 7 shows a sequence (a)-(d) of four coherence maps obtained over four different observation periods for monitoring wildfire progression of the example Rum Creek Wildfire. The initial coherence map 600 shown in Figure 7(a) has been created based on the difference in phase of a first interferometric SAR image pair of the area over a first observation period between 26 and 28 August 2022. The subsequent coherence map 610 shown in Figure 7(b) has been created based on the difference in phase of a second interferometric SAR image pair of the area over a second observation period between 26 and 29 August 2022. The additional coherence map 620 shown in Figure 7(c) has been created based on the difference in phase of an additional interferometric SAR image pair of the area over an additional observation period between 28 and 29 August 2022. The additional coherence map 630 shown in Figure 7(d) has been created based on the difference in phase of an additional interferometric SAR image pair of the area over an additional observation period between 31 August and 1 September 2022. Accordingly, the observation periods of all coherence maps 600, 610, 620, 630 relate to time intervals during which the wildfire remained active. The short observation periods range approximately between 24 hours and 72 hours.

An exemplary method for monitoring wildfire progression will be explained with reference to Figures 7(a)-(d). After the area on the surface of Earth where a wildfire has started was identified, it was instructed to acquire a first SAR image pair of the area over a first observation period, wherein the wildfire remains active during the first observation period. The first observation period in this example is between 26 August 2022 and 28 August 2022. After receiving the first interferometric image pair, the initial coherence map 600 is created based on the difference in phase of the first interferometric image pair. Based on the initial coherence map 600, an area of low coherence 601 is determined. The area of low coherence 601 is indicative of a transition from a forested into a burnt area, that occurred during the observation period between 26 August 2022 and 28 August 2022. This provides a bounded and fairly narrow time frame for which this area was burnt or is still burning.

The exemplary method for monitoring wildfire progression further includes to instruct the acquisition of a second interferometric SAR image pair of the area over a second observation period, wherein the second observation period is subsequent the first observation period. Regarding Figure 7, each subsequent and additional coherence map 610, 620, 630 is created based on a second interferometric pair acquired over a second observation period, wherein the second observation period is subsequent the first observation period. Accordingly, each coherence map 610, 620, 630 can be considered a subsequent coherence map to the initial coherence map 600.

For example, the observation period of coherence map 610 fully overlaps with the observation period of initial coherence map 600 and further extends to 29 August 2022. Accordingly, the observation period of coherence map 610 is a time interval that extends at least partly after the point in time where the first observation period ends (28 August 2022). In another example, the observation period of coherence map 620 does not overlap with the observation period of initial coherence map 600 but begins at the same point in time where the observation period of the initial coherence map 600 ends. Accordingly, the observation period of coherence map 620 is a time interval that extends fully after the point in time where the first observation period ends. The same is applicable to the observation period of coherence map 630. Accordingly, the observation period of coherence map 630 is a time interval that extends fully after the point in time where the first observation period ends.

As can be seen from the example in Figure 7, a second interferometric image pair (corresponding to subsequent coherence maps 610, 620) may use at least partly the same SAR image data as the first interferometric image pair (corresponding to initial coherence map 600). In the specific example of coherence map 610, the first and second interferometric image pairs share the first SAR image (i.e., 28 August 2022), wherein in the specific example of coherence map 620, the first and second interferometric pairs both include the SAR image of 28 August 2022 (i.e., second SAR image of the first interferometric image pair and first SAR image of the second interferometric image pair). In another example, the second interferometric image pair (corresponding to subsequent coherence map 630) may use completely different SAR image data as compared to the first interferometric image pair (corresponding to initial coherence map 600). Accordingly, an initial coherence map and a subsequent coherence map can be formed from three or four SAR images. Different scenarios for imaging sequences that can be used to acquire the three or four SAR images are described further with reference to Figures 9-12.

Once the second interferometric SAR image pair is received, a subsequent coherence map 610, 620, 630 is created based on the difference in phase of the second interferometric SAR image pair. Based on the subsequent coherence map a change of the one or more areas of low coherence indicative of a progression of the wildfire can be monitored.

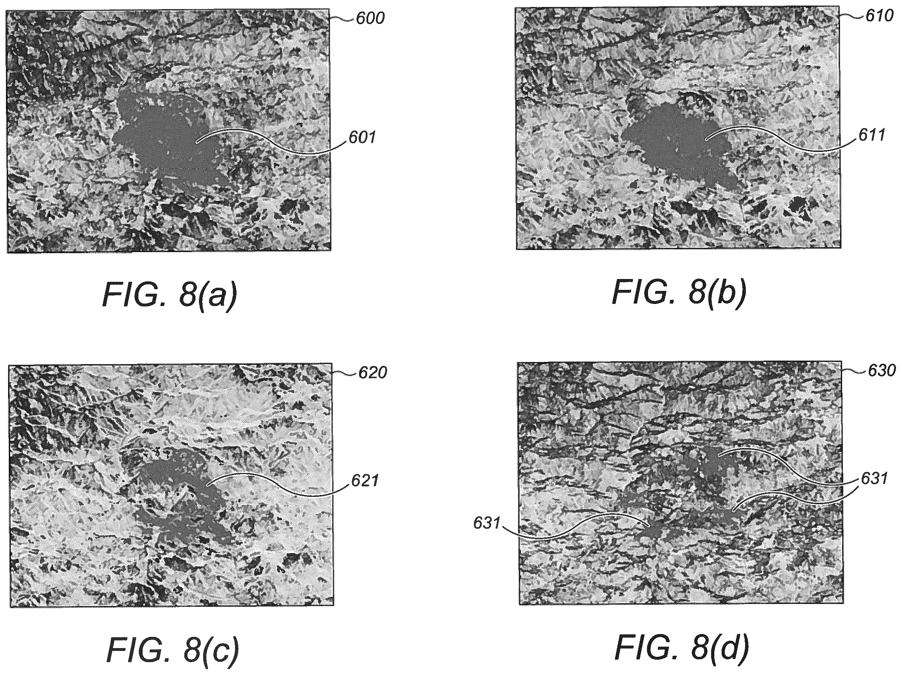

As explained in further detail below, the subsequent coherence map 610, 620, 630 can be used to determine one or more subsequent areas of low coherence indicative of a transition from a forested into a burnt area. Alternatively or additionally, the subsequent coherence map 610, 620, 630 can be used to determine a time interval in which the one or more areas of low coherence return to average coherence and/or high coherence. For example, to provide a visual representation of the progression of the fire and/or to identify hot spots, the one or more areas of low coherence of the initial coherence map 610 and the one or more subsequent areas of low coherence may can be highlighted, for example, using false colour, as is shown in Figures 8(a)-(d).

The change of the one or more areas of low coherence may include a difference in size, a difference in position, a difference in shape, a difference in coherence or a direction and/or rate of change of coherence. Subsequent coherence map 610 only shows small changes with respect to the area of low coherence 601 in coherence map 600. Subsequent coherence map 610 includes a subsequent area of low coherence 611 that is almost identical to the area of low coherence 601 in coherence map 600. This to be expected because of the large overlap of the first and second observation periods. However, the subsequent area of low coherence 611 is slightly increased as compared to the area low coherence 601 indicative of a progression of the wildfire.

The scene captured in subsequent coherence map 620 shows high coherence values in the middle of a subsequent area of low coherence 621 indicating that the area was already burnt when the second interferometric image pair was acquired. Accordingly, there is no more change on the ground from those areas in the middle as they are already burnt, and the coherence values have come back into coherence. It can be seen from coherence map 620 that the fire is now spreading out from the edges into areas, likely where there is more fuel once the fuel in the middle of the fire has been exhausted. Similar behaviour can be observed for the scene captured in subsequent coherence map 630, wherein multiple smaller subsequent areas of low coherence 631 are depicted. Coherence map 630 shows that most of the original area of the fire has been burnt and is no longer in coherence. There are only a few remaining areas or spots of low coherence 631 indicating hot spots where the wildfire is still burning. This can help firefighters to identify and put out hot spots in order to keep the fire from spreading further or from flaring up again.

The exemplary method for monitoring wildfire progression may further comprise the creation of a time-lapse video. In one example, the time-lapse video may comprise the initial coherence map 600 and at least one of the subsequent coherence maps 610, 620, 630, arranged in order of time. Observation period 630 also does not need to follow immediately after observation period 620. In this example, observation period 620 ends on 29 August 2022, and observation period 630 starts on 31 August 2022, so there can also be a time gap between non-overlapping observation periods.

In some embodiments, the time-lapse video may comprise additional coherence maps created based on the difference in phase of one or more additional interferometric SAR image pairs acquired over subsequent observation periods. In this example, the time-lapse video may comprise the initial coherence map 600, the subsequent coherence map 610 and one or both additional coherence maps 620 and 630. Accordingly, several hours or days of real-time data can be shown in just a few seconds as a time lapse video for monitoring the progression of the wildfire. A time-lapse video can be created, for example, as a .gif file.

Referring to Figure 8, a time-lapse video created from coherence maps 800, and at least one of the subsequent coherence mays 810, 820, 830 may comprise coherence maps in which the one or more areas of low coherence 801, 811, 821, 831 and the one or more subsequent areas of low coherence are highlighted to provide a visual representation of the progression of the wildfire and/or to identify hot spots. The highlighting may be done using false colour. As can be seen in Figure 8, using a red colour to highlight the low coherence areas 801, 811, 821, 831 can really serve to highlight where the fire is burning, including hot spots near the end, and to visually show the progression of the wildfire, in order to quickly and clearly communicate to fire fighters and emergency responders how the wildfire is progressing and where their efforts needs to be focussed. Some of these techniques can also be combined with predictive efforts using models and weather forecasts to create and communicate predictions of how and where the fire may develop.

Figure 9(a)-(c) shows how phase filtering can be used to increase the coherence in the forested (unburnt) areas in the coherence maps formed from an interferometric SAR image pair. The phase filtering effectively increasing the contrast between the forested and recently burnt areas 901. As noted previously, the coherence of forested areas can decay over time due, for example, to a change in foliage, to vegetation growth, and to changing weather conditions. This problem can be exacerbated with the use of high-resolution X-band SAR, that is capable of detecting very small changes. Being able to detect very small changes can be useful for many traditional inSAR applications, but for wildfire monitoring a significant loss of coherence in the forested areas resulting from small changes can make it more difficult to distinguish between the forested areas and the burnt areas, since both can now have low coherence and show up as being dark on a coherence map. The loss of coherence can be mitigated with a shorter time period between images of an interferometric pair, and/or by using phase filtering.

Figures 9(a)-(c) show a coherence map with different phase filters applied to the original inSAR images used to form the coherence map. The images were taken on 26 August 2022 and 28 August 2022. Figure 9(a) shows a coherence map 900 including an area of low coherence 901 whereby a phase filter has been used that incorporates a 3×3 pixel sliding window to smooth out the phase values. Instead of comparing the original phase numbers pixel by pixel to determine the coherence between the two images, a local coherence is created using all the phase values in a small moving 3×3 window instead. Using this sliding window, a coherence map is created for the whole image. Using all the values in a small area instead of individual pixels to determine coherence tends to average or smooth out the phase numbers, reducing noise and in effect reducing the phase resolution of the original images. For example, if the starting resolution of an image is 3 m, as could be the case when using the SAR stripmap mode to acquire the images, each pixel represents a nominal 3 m × 3 m area on the ground. A sliding 3 × 3 pixel window thus represents approximately a 9 m × 9 m area on the ground, and the resulting coherence number represents the coherence a 9 m × 9 m sliding window instead of the smaller 3 m × 3 m area represented by each pixel. The phase resolution has therefore been effectively reduced from 3m to 9m. This can help to filter out noise and to smooth out the fluctuation in the phase numbers, increasing the likelihood of the unburnt forested areas remaining in coherence between the two images forming the inSAR pair. Having the forested areas show up as coherent helps to distinguish it from the areas that have changed significantly (e.g., areas that have been burnt) between the time of the first image and the time of the second image of the interferometric SAR image pair. In Figure 9(a), the burnt area 901 remains discernible in the image because it is darker (indicating very low coherence due to the large change in going from unburnt to burnt) than the surrounding area, but the surrounding forested (unburnt) area 903 is also fairly dark indicating that some coherence has been lost in the forested areas.

Figure 9(b) shows the result of applying a phase filter with a larger 15 × 15 sliding window to form a coherence map 910 including an area of low coherence 911 using the same interferometric SAR image pair as in Figure 9(a). In this case the phase resolution has effectively been reduced from a nominal 3 m to 45 m. Normally, inSAR is used to detect small changes, so it would not be desirable to reduce the phase resolution by so much because details and information about small changes could be lost, for example for objects that are on the order of 10 m. However, in the case of wildfires, phase resolutions of 9 m to 50 m may be sufficient since wildfires are typically large area features that can cover hundreds of square kilometres, and a lower level of resolution is sufficient for wildfire monitoring. As can be seen in Figure 9(b), the coherence in the unburnt (forested) area 913 is further increased (brighter) from Figure 9(a), making separating out the burnt area from the unburnt (forested) area easier.

Figure 9(c) shows a coherence map 920 including an area of low coherence 922 with an improved contrast ratio, making the burnt area even more visible. In this case, a 15 × 15 window was first used to average the phase values, as in Figure 9(b). Subsequently, an additional noise-reducing filter was applied to refine the coherence map 920. In this example, a modified Goldstein phase filter has been used to further reduce noise and to increase coherence in the coherence map after filtering with the sliding 15×15 window. Other filters such as a boxcar filter could also be used. As evident in Figure 9(c), the contrast ratio has been significantly improved and the unburnt (forested) area 923 has a higher coherence compared to Figures 9(a) and 9(b), giving a higher contrast ratio when compared to burnt area 922 than what would have been achieved if additional phase filtering was not used. This filtering process was used, for example, to create the coherence map shown in Figure 7(a). The modified Goldstein phase filter could also be used in conjunction with a 3×3 sliding window, by itself, or in combination with other filters.

In an example, phase filtering can be performed on interferometric SAR image pairs with help of third-party SAR processing software such as 2023 SARproZ ^{©}. Using 2023 SARproZ ^{©}, coherence maps between interferometric SAR image pairs can be formed using various types and combinations of filters, including, for example, the 3×3 sliding window, the 15×15 sliding window, and/or additional noise-reducing filters such as the modified Goldstein phase filter or a boxcar filter.

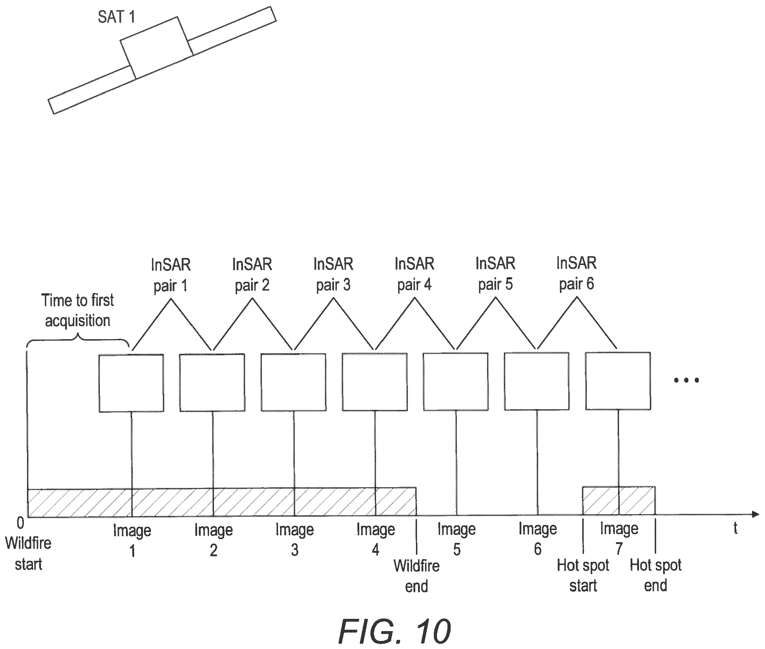

With reference to Figures 10 to 13, different scenarios for imaging sequences for acquiring the first and second interferometric image pairs for wildfire progression are explained. All of these examples show how a first interferometric image pair is acquired over a first observation period, wherein the wildfire remains active during the first observation period. Further, all of these examples show how a second interferometric pair is acquired over a second observation period, wherein the second observation period is subsequent the first observation period. In other words, a second observation period subsequent a first observation period is a time interval that extends at least partly after the point in time where the first observation period ends. Optionally, the second interferometric pair is also acquired during a time in which the wildfire remains active.

In the example shown in Figure 10, once the wildfire has been identified, successive images are acquired from a single satellite SAT1. The SAR images may be acquired within a time interval of 72 hours, optionally 48 hours, more optionally 24 hours. For example, repeat times could be as little as 4, 6, or 12 hours and the low side, and also much longer. The images also do not need to be taken at regular intervals. For example, the first pair could be taken with a 24 hour interval, and the second pair could be taken with a 72 hour or greater (e.g., 113 hour) interval. In this example, all SAR images are taken from the same imaging geometry. Two successive images form an interferometric pair, e.g., InSAR Pair1, InSAR Pair2, InSAR Pair3, etc. For example, InSAR Pair1 is formed from SAR image 1 and SAR Image 2, wherein InSAR Pair 2 is formed from SAR image 2 and SAR image 3. Accordingly, InSAR Pair2 has been acquired over a subsequent observation period as compared to InSAR Pair 1. To acquire InSAR pairs 1 and 2 only three SAR images need to be acquired. In this example, the observation periods are non-overlapping. While InSAR Pairs 1 to 3 relate to observation periods in which the wildfire remains active, InSAR Pairs 4 to 6 may relate to observation periods in which the wildfire has finished burning or only hot spots are present. Even after a wildfire appears to have been put out, hot spots can sometimes flare up again. Continuing monitoring for a period of time after the inSAR pairs indicate that the fire has stopped changing can help to detect flare ups of hot spots, for example reigniting from ashes under the ground.

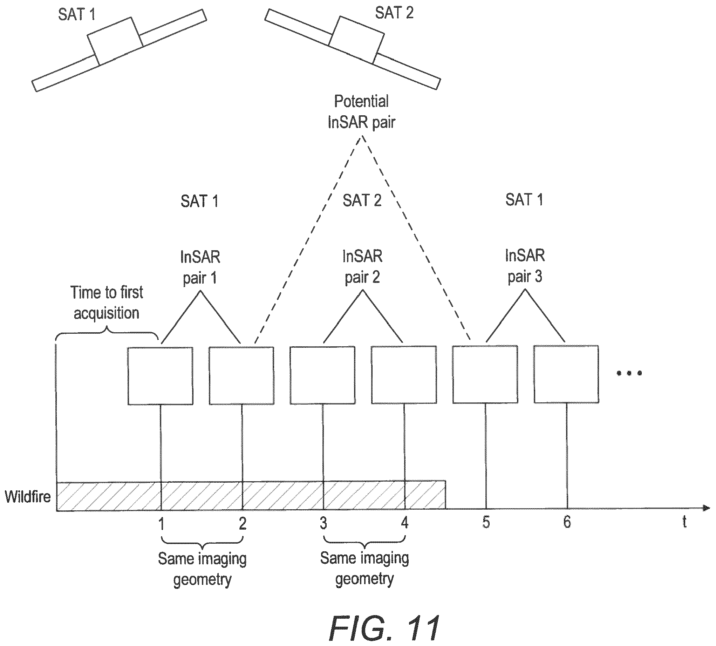

In the example shown in Figure 11, once the wildfire has been identified, images are acquired from two different satellites SAT1 and SAT2. Two or more satellites may allow for more rapid revisits for monitoring the wildfire while it progresses. In this example, two successive SAR images are taken from satellite SAT1 to from InSAR pair 1 and two successive images are taken from satellite SAT2 to form InSAR pair 2. In this scenario, the same imaging geometry is used for the SAR images forming InSAR pair 1 or 2, respectively. However, different imaging geometries may be used for different satellites. Obtaining image data from different satellites may allow to obtain image pairs over shorter observation periods and/or more image pairs over the same time span during which the wildfire remains active. In this example, the observation periods are non-overlapping. However, it is also possible to form additional InSAR pairs, e.g., potential InSAR pair, with overlapping observation periods by combining SAR images acquired from the same satellite over different observation periods.

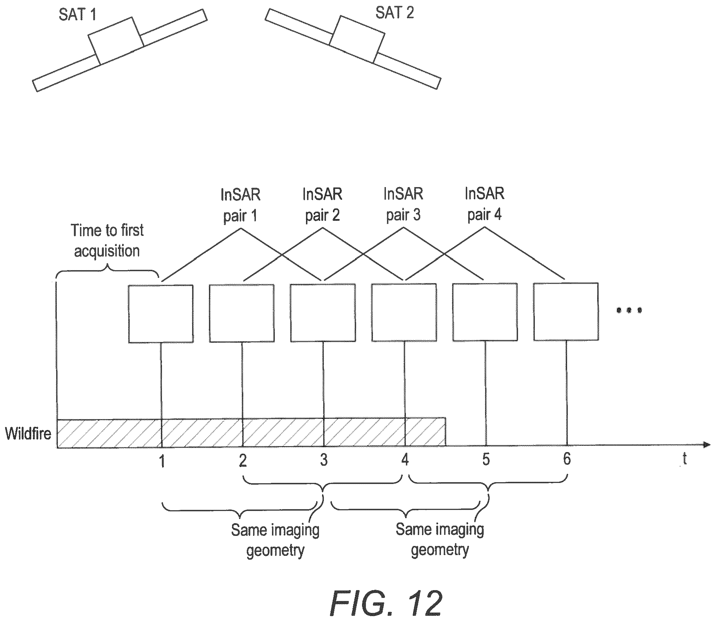

In the example shown in Figure 12, once the wildfire has been identified, images acquired from two different satellites SAT1 and SAT2 are used to obtain interleaved InSAR pairs. For example, from a chronological point of view, InSAR pair 1 may be formed from the first and third SAR images that have been acquired by a first satellite SAT1 using the same imaging geometry, wherein InSAR pair 2 may be formed from the second and fourth SAR images that have been acquired by a second satellite SAT2 using the same imaging geometry. In this example, the observation periods are partly overlapping. For example, if SAT1 and SAT2 are producing images in the same geometry as each other, the first inSAR pair could be produced from SAT1 Image 1 and SAT2 Image 2.

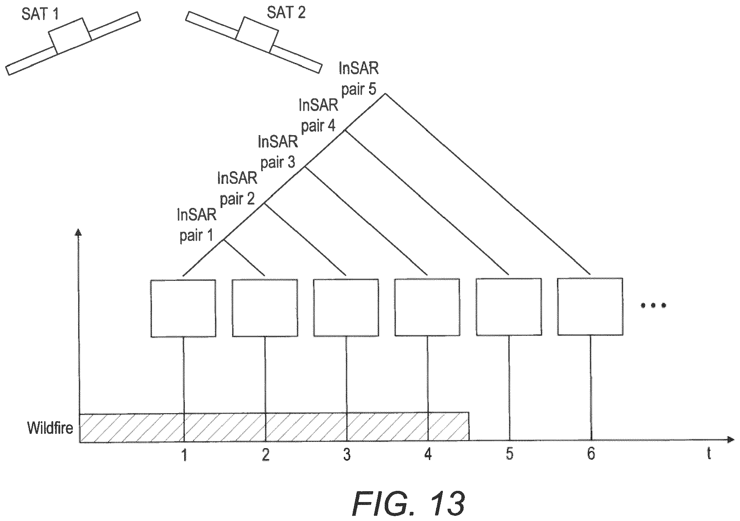

In the example shown in Figure 13, once the wildfire has been identified, images are acquired from two different satellites SAT1, SAT2 using the same imaging geometry. In this example, all InSAR pairs are formed using the first SAR image. From a chronological point of view, InSAR pair 1 is formed using the first and second SAR images, where each subsequent InSAR pair x is formed using the first and (x+1)th SAR images, respectively. In this example, the observation periods are fully overlapping in the sense that each subsequent observation period fully contains the initial/previous observation period(s). Although some examples of how the InSAR pairs can be collected, other configurations could also be possible.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray (RTM) disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

It is to be understood that the computing device used to implement the method of the claimed invention may be a distributed system. Thus, for instance, several devices may be in communication by way of a network connection and may collectively perform tasks described as being performed by the computing device.

It will be appreciated that the computing device that carries out the method of the claimed invention may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method for monitoring wildfire progression, comprising the steps:
identifying an area on the surface of Earth where a wildfire has started;
instructing to acquire a first interferometric Synthetic Aperture Radar 'SAR' image pair of the area over a first observation period, wherein the wildfire remains active during the first observation period;
receiving the first interferometric SAR image pair and creating an initial coherence map based on the difference in phase of the first interferometric SAR image pair;
determining, based on the initial coherence map, one or more areas of low coherence indicative of a transition from a forested into a burnt area;
instructing to acquire a second interferometric SAR image pair of the area over a second observation period, wherein the second observation period is subsequent the first observation period;
receiving the second interferometric SAR image pair and creating a subsequent coherence map based on the difference in phase of the second interferometric SAR image pair; and
monitoring a change of the one or more areas of low coherence based on the subsequent coherence map indicative of a progression of the wildfire.

2. The method of claim 1, wherein the change of the one or more areas of low coherence includes one or more of: a difference in size, a difference in position, a difference in shape, a difference of coherence, a direction and/or rate of change of coherence.

3. The method of claim 1 or 2, wherein the area of low coherence has a coherence value less than a threshold value, optionally wherein the threshold value is 0.3, more optionally wherein the threshold value is 0.2.

4. The method of any preceding claim, wherein the first observation period and/or the second observation period are within a time interval of 72 hours, optionally 48 hours, more optionally 24 hours.

5. The method of any preceding claim, wherein the second interferometric pair is acquired during a time in which the wildfire remains active.

6. The method of any preceding claim, wherein the first and second interferometric pairs are obtained by one or more satellites operating in the X-Band range.

7. The method of any preceding claim, wherein the first interferometric pair and the second interferometric pair are obtained from different satellites; or wherein the first interferometric pair and/or the second interferometric pair are formed based on two SAR images taken from different satellites.

8. The method of any preceding claim, wherein the first interferometric pair and the second interferometric pair are obtained from different imaging geometries.

9. The method of any preceding claim, wherein determining one or more areas of low coherence comprises determining a perimeter around the one or more areas of low coherence.

10. The method of any preceding claim, further comprising:
determining, based on the subsequent coherence map, one or more subsequent areas of low coherence indicative of a transition from a forested into a burnt area.

11. The method of any one of claims 1-8, further comprising:
determining, based on the subsequent coherence map, a time interval in which the one or more areas of low coherence return to average coherence and/or high coherence.

12. The method of any preceding claim, wherein the one or more areas of low coherence and/or the one or more subsequent areas of low coherence are highlighted to provide a visual representation of the progression of the fire and/or to identify hot spots, optionally using false colour.

13. The method of any preceding claim, wherein the coherence of forested areas is increased by a phase filter that reduces a phase resolution, reduces noise, and/or increases contrast in a coherence map formed from the first and/or second interferometric SAR image pair.

14. The method of any preceding claim, further comprising:
creating a time-lapse video comprising the initial coherence map and the subsequent coherence map and optionally one or more additional coherence maps created based on the difference in phase of one or more additional interferometric SAR image pairs acquired over subsequent observation periods.

15. A ground station system for monitoring wildfire progression, wherein the ground station system comprises a computing system configured to perform the method of any preceding claim.

## Amended claims

### Amended claims in accordance with Rule 137(2) EPC.

1. A method for monitoring wildfire progression, comprising the steps:
(101) identifying an area on the surface of Earth where a wildfire has started;
(102) instructing to acquire a first interferometric Synthetic Aperture Radar 'SAR' image pair of the area over a first observation period, wherein the wildfire remains active during the first observation period;
(103) receiving the first interferometric SAR image pair and creating an initial coherence map based on the difference in phase of the first interferometric SAR image pair;
(104) determining, based on the initial coherence map, one or more areas of low coherence (401, 501, 601) indicative of a transition from a forested into a burnt area;
(105) instructing to acquire a second interferometric SAR image pair of the area over a second observation period, wherein the second observation period is subsequent to the first observation period;
(106) receiving the second interferometric SAR image pair and creating a subsequent coherence map (610) based on the difference in phase of the second interferometric SAR image pair; and
(107) monitoring a change of the one or more areas of low coherence (401, 501, 601) based on the subsequent coherence map indicative of a progression of the wildfire.

2. The method of claim 1, wherein the change of the one or more areas of low coherence (401, 501, 601) includes one or more of: a difference in size, a difference in position, a difference in shape, a difference of coherence, a direction and/or rate of change of coherence.

3. The method of claim 1 or 2, wherein the area of low coherence (401, 501, 601) has a coherence value less than a threshold value, optionally wherein the threshold value is 0.3, more optionally wherein the threshold value is 0.2.

4. The method of any preceding claim, wherein the first observation period and/or the second observation period are within a time interval of 72 hours, optionally 48 hours, more optionally 24 hours.

5. The method of any preceding claim, wherein the second interferometric pair is acquired during a time in which the wildfire remains active.

6. The method of any preceding claim, wherein the first and second interferometric pairs are obtained by one or more satellites operating in the X-Band range.

7. The method of any preceding claim, wherein the first interferometric pair and the second interferometric pair are obtained from different satellites; or wherein the first interferometric pair and/or the second interferometric pair are formed based on two SAR images taken from different satellites.

8. The method of any preceding claim, wherein the first interferometric pair and the second interferometric pair are obtained from different imaging geometries.

9. The method of any preceding claim, wherein determining one or more areas of low coherence (401, 501, 601) comprises determining a perimeter around the one or more areas of low coherence.

10. The method of any preceding claim, further comprising:
determining, based on the subsequent coherence map (610), one or more subsequent areas of low coherence indicative of a transition from a forested into a burnt area.

11. The method of any one of claims 1-8, further comprising:
determining, based on the subsequent coherence map (610), a time interval in which the one or more areas of low coherence return to average coherence and/or high coherence.

12. The method of any preceding claim, wherein the one or more areas of low coherence and/or the one or more subsequent areas of low coherence are highlighted to provide a visual representation of the progression of the fire and/or to identify hot spots, optionally using false colour.

13. The method of any preceding claim, wherein the coherence of forested areas is increased by a phase filter that reduces a phase resolution, reduces noise, and/or increases contrast in a coherence map formed from the first and/or second interferometric SAR image pair

14. The method of any preceding claim, further comprising:
creating a time-lapse video comprising the initial coherence map (600) and the subsequent coherence map (610) and optionally one or more additional coherence maps (620, 630) created based on the difference in phase of one or more additional interferometric SAR image pairs acquired over subsequent observation periods.

15. A ground station system for monitoring wildfire progression, wherein the ground station system comprises a computing system configured to perform the method of any preceding claim.
